# EUROPEAN PATENT APPLICATION

(11) **EP 4 199 631 A1**
(43) Date of publication of application: **21.06.2023**
(21) Application number: 22204883.7
(22) Date of filing: 01.11.2022
(51) Int. Cl.: H04W 72/23, H04W 74/06, H04W 84/12

(54) **TRIGGER WITH MULTIPLE START TIMES**

(30) Priority: 20.12.2021 US 202117556427
(71) Applicant: Intel Corporation, Santa Clara, CA 95054 (US)
(72) Inventor: KENNEY, Thomas, Portland, 97229 (US); CARIOU, Laurent, 29290 Milizac (FR)
(74) Representative: Viering, Jentschura & Partner mbB Patent- und Rechtsanwälte

(57) **Abstract**

Methods, apparatuses, and computer readable media for trigger frames or transmission opportunities with multiple start times and delayed uplink start are disclosed. Apparatuses of a station (STA) are disclosed, where the apparatuses comprise processing circuitry configured to decode a trigger frame, the trigger frame indicating a time allocation of a plurality of time allocations and indicating a resource unit (RU) for an uplink transmission for the STA. The processing circuitry is further configured to: encode an uplink (UL) trigger-based (TB) physical (PHY) protocol data unit (PPDU) in accordance with the time allocation and the RU and configure the STA to transmit the UL TB PPDU on the RU during the time allocation. Trigger frames are disclosed that include indications of multiple time allocations for multiple RUs where the STAs are permitted to use delayed transmissions or random access within the time allocations.

## Description

### TECHNICAL FIELD

Embodiments relate to simultaneous uplink transmission in response to trigger frames in accordance with wireless local area networks (WLANs) and Wi-Fi networks including networks operating in accordance with different versions or generations of the IEEE 802.11 family of standards. Some embodiments relate to the trigger frame including a schedule that indicates multiple time allocations and multiple resource units (RUs) for the uplink transmissions where the uplink transmission are by non-access points (AP) stations (STAs) in response to trigger frames transmitted by access points (APs).

### BACKGROUND

Efficient use of the resources of a wireless local-area network (WLAN) is important to provide bandwidth and acceptable response times to the users of the WLAN. However, often there are many devices trying to share the same resources and some devices may be limited by the communication protocol they use or by their hardware bandwidth. Moreover, wireless devices may need to operate with both newer protocols and with legacy device protocols.

### BRIEF DESCRIPTION OF THE DRAWINGS

The present disclosure is illustrated by way of example and not limitation in the figures of the accompanying drawings, in which like references indicate similar elements and in which:
FIG. 1 is a block diagram of a radio architecture in accordance with some embodiments.
FIG. 2 illustrates a front-end module circuitry for use in the radio architecture of FIG. 1 in accordance with some embodiments.
FIG. 3 illustrates a radio IC circuitry for use in the radio architecture of FIG. 1 in accordance with some embodiments.
FIG. 4 illustrates a baseband processing circuitry for use in the radio architecture of FIG. 1 in accordance with some embodiments.
FIG. 5 illustrates a WLAN in accordance with some embodiments.
FIG. 6 illustrates a block diagram of an example machine upon which any one or more of the techniques (e.g., methodologies) discussed herein may perform.
FIG. 7 illustrates a block diagram of an example wireless device upon which any one or more of the techniques (e.g., methodologies or operations) discussed herein may perform.
FIG. 8 illustrates a method for a trigger frame with multiple start times, in accordance with some embodiments.
FIG. 9 illustrates a method for a trigger frame with multiple start times, in accordance with some embodiments.
FIG. 10 illustrates a method for a trigger frame with multiple start times, in accordance with some embodiments.
FIG. 11 illustrates a method for a trigger frame with multiple start times, in accordance with some embodiments.
FIG. 12 illustrates a trigger frame, in accordance with some embodiments.
FIG. 13 illustrates a method for a trigger frame with multiple start times, in accordance with some embodiments.
FIG. 14 illustrates a method for a trigger frame with multiple start times, in accordance with some embodiments.

### DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Some embodiments relate to methods, computer readable media, and apparatus for ordering or scheduling location measurement reports, traffic indication maps (TIMs), and other information during SPs. Some embodiments relate to methods, computer readable media, and apparatus for extending TIMs. Some embodiments relate to methods, computer readable media, and apparatus for defining SPs during beacon intervals (BI), which may be based on TWTs.

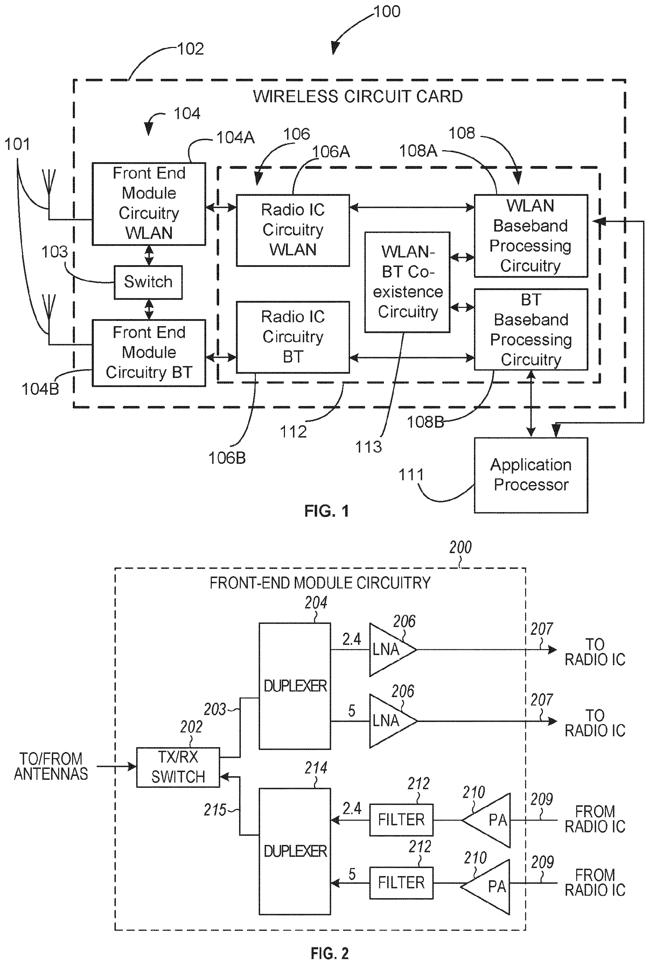

FIG. 1 is a block diagram of a radio architecture 100 in accordance with some embodiments. Radio architecture 100 may include radio front-end module (FEM) circuitry 104, radio IC circuitry 106 and baseband processing circuitry 108. Radio architecture 100 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 104 may include a WLAN or Wi-Fi FEM circuitry 104A and a Bluetooth (BT) FEM circuitry 104B. The WLAN FEM circuitry 104A may include a receive signal path comprising circuitry configured to operate on WLAN RF signals received from one or more antennas 101, to amplify the received signals and to provide the amplified versions of the received signals to the WLAN radio IC circuitry 106A for further processing. The BT FEM circuitry 104B may include a receive signal path which may include circuitry configured to operate on BT RF signals received from one or more antennas 101, to amplify the received signals and to provide the amplified versions of the received signals to the BT radio IC circuitry 106B for further processing. FEM circuitry 104A may also include a transmit signal path which may include circuitry configured to amplify WLAN signals provided by the radio IC circuitry 106A for wireless transmission by one or more of the antennas 101. In addition, FEM circuitry 104B may also include a transmit signal path which may include circuitry configured to amplify BT signals provided by the radio IC circuitry 106B for wireless transmission by the one or more antennas. In the embodiment of FIG. 1, although FEM 104A and FEM 104B are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 106 as shown may include WLAN radio IC circuitry 106A and BT radio IC circuitry 106B. The WLAN radio IC circuitry 106A may include a receive signal path which may include circuitry to down-convert WLAN RF signals received from the FEM circuitry 104A and provide baseband signals to WLAN baseband processing circuitry 108A. BT radio IC circuitry 106B may in turn include a receive signal path which may include circuitry to down-convert BT RF signals received from the FEM circuitry 104B and provide baseband signals to BT baseband processing circuitry 108B. WLAN radio IC circuitry 106A may also include a transmit signal path which may include circuitry to up-convert WLAN baseband signals provided by the WLAN baseband processing circuitry 108A and provide WLAN RF output signals to the FEM circuitry 104A for subsequent wireless transmission by the one or more antennas 101. BT radio IC circuitry 106B may also include a transmit signal path which may include circuitry to up-convert BT baseband signals provided by the BT baseband processing circuitry 108B and provide BT RF output signals to the FEM circuitry 104B for subsequent wireless transmission by the one or more antennas 101. In the embodiment of FIG. 1, although radio IC circuitries 106A and 106B are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 108 may include a WLAN baseband processing circuitry 108A and a BT baseband processing circuitry 108B. The WLAN baseband processing circuitry 108A may include a memory, such as, for example, a set of RAM arrays in a Fast Fourier Transform or Inverse Fast Fourier Transform block (not shown) of the WLAN baseband processing circuitry 108A. Each of the WLAN baseband circuitry 108A and the BT baseband circuitry 108B may further include one or more processors and control logic to process the signals received from the corresponding WLAN or BT receive signal path of the radio IC circuitry 106, and to also generate corresponding WLAN or BT baseband signals for the transmit signal path of the radio IC circuitry 106. Each of the baseband processing circuitries 108A and 108B may further include physical layer (PHY) and medium access control layer (MAC) circuitry, and may further interface with application processor 111 for generation and processing of the baseband signals and for controlling operations of the radio IC circuitry 106.

Referring still to FIG. 1, according to the shown embodiment, WLAN-BT coexistence circuitry 113 may include logic providing an interface between the WLAN baseband circuitry 108A and the BT baseband circuitry 108B to enable use cases requiring WLAN and BT coexistence. In addition, a switch 103 may be provided between the WLAN FEM circuitry 104A and the BT FEM circuitry 104B to allow switching between the WLAN and BT radios according to application needs. In addition, although the antennas 101 are depicted as being respectively connected to the WLAN FEM circuitry 104A and the BT FEM circuitry 104B, embodiments include within their scope the sharing of one or more antennas as between the WLAN and BT FEMs, or the provision of more than one antenna connected to each of FEM 104A or 104B.

In some embodiments, the front-end module circuitry 104, the radio IC circuitry 106, and baseband processing circuitry 108 may be provided on a single radio card, such as wireless radio card 102. In some other embodiments, the one or more antennas 101, the FEM circuitry 104 and the radio IC circuitry 106 may be provided on a single radio card. In some other embodiments, the radio IC circuitry 106 and the baseband processing circuitry 108 may be provided on a single chip or IC, such as IC 112.

In some embodiments, the wireless radio card 102 may include a WLAN radio card and may be configured for Wi-Fi communications, although the scope of the embodiments is not limited in this respect. In some of these embodiments, the radio architecture 100 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 100 may be part of a Wi-Fi communication station (STA) such as a wireless access point (AP), a base station or a mobile device including a Wi-Fi device. In some of these embodiments, radio architecture 100 may be configured to transmit and receive signals in accordance with specific communication standards and/or protocols, such as any of the Institute of Electrical and Electronics Engineers (IEEE) standards including, IEEE 802.11n-2009, IEEE 802.11-2012, IEEE 802.11-2016, IEEE 802.11ac, and/or IEEE 802.11ax standards and/or proposed specifications for WLANs, although the scope of embodiments is not limited in this respect. Radio architecture 100 may also be suitable to transmit and/or receive communications in accordance with other techniques and standards.

In some embodiments, the radio architecture 100 may be configured for high-efficiency (HE) Wi-Fi (HEW) communications in accordance with the IEEE 802.11ax standard. In these embodiments, the radio architecture 100 may be configured to communicate in accordance with an OFDMA technique, although the scope of the embodiments is not limited in this respect.

In some other embodiments, the radio architecture 100 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1, the BT baseband circuitry 108B may be compliant with a Bluetooth (BT) connectivity standard such as Bluetooth, Bluetooth 4.0 or Bluetooth 5.0, or any other iteration of the Bluetooth Standard. In embodiments that include BT functionality as shown for example in Fig. 1, the radio architecture 100 may be configured to establish a BT synchronous connection oriented (SCO) link and/or a BT low energy (BT LE) link. In some of the embodiments that include functionality, the radio architecture 100 may be configured to establish an extended SCO (eSCO) link for BT communications, although the scope of the embodiments is not limited in this respect. In some of these embodiments that include a BT functionality, the radio architecture may be configured to engage in a BT Asynchronous Connection-Less (ACL) communications, although the scope of the embodiments is not limited in this respect. In some embodiments, as shown in FIG. 1, the functions of a BT radio card and WLAN radio card may be combined on a single wireless radio card, such as single wireless radio card 102, although embodiments are not so limited, and include within their scope discrete WLAN and BT radio cards

In some embodiments, the radio-architecture 100 may include other radio cards, such as a cellular radio card configured for cellular (e.g., 3GPP such as LTE, LTE-Advanced or 5G communications).

In some IEEE 802.11 embodiments, the radio architecture 100 may be configured for communication over various channel bandwidths including bandwidths having center frequencies of about 900 MHz, 2.4 GHz, 5 GHz, and bandwidths of about 1 MHz, 2 MHz, 2.5 MHz, 4 MHz, 5MHz, 8 MHz, 10 MHz, 16 MHz, 20 MHz, 40MHz, 80MHz (with contiguous bandwidths) or 80+80MHz (160MHz) (with non-contiguous bandwidths). In some embodiments, a 320 MHz channel bandwidth may be used. The scope of the embodiments is not limited with respect to the above center frequencies however.

FIG. 2 illustrates FEM circuitry 200 in accordance with some embodiments. The FEM circuitry 200 is one example of circuitry that may be suitable for use as the WLAN and/or BT FEM circuitry 104A/104B (FIG. 1), although other circuitry configurations may also be suitable.

In some embodiments, the FEM circuitry 200 may include a TX/RX switch 202 to switch between transmit mode and receive mode operation. The FEM circuitry 200 may include a receive signal path and a transmit signal path. The receive signal path of the FEM circuitry 200 may include a low-noise amplifier (LNA) 206 to amplify received RF signals 203 and provide the amplified received RF signals 207 as an output (e.g., to the radio IC circuitry 106 (FIG. 1)). The transmit signal path of the circuitry 200 may include a power amplifier (PA) to amplify input RF signals 209 (e.g., provided by the radio IC circuitry 106), and one or more filters 212, such as band-pass filters (BPFs), low-pass filters (LPFs) or other types of filters, to generate RF signals 215 for subsequent transmission (e.g., by one or more of the antennas 101 (FIG. 1)).

In some dual-mode embodiments for Wi-Fi communication, the FEM circuitry 200 may be configured to operate in either the 2.4 GHz frequency spectrum or the 5 GHz frequency spectrum. In these embodiments, the receive signal path of the FEM circuitry 200 may include a receive signal path duplexer 204 to separate the signals from each spectrum as well as provide a separate LNA 206 for each spectrum as shown. In these embodiments, the transmit signal path of the FEM circuitry 200 may also include a power amplifier 210 and a filter 212, such as a BPF, a LPF or another type of filter for each frequency spectrum and a transmit signal path duplexer 214 to provide the signals of one of the different spectrums onto a single transmit path for subsequent transmission by the one or more of the antennas 101 (FIG. 1). In some embodiments, BT communications may utilize the 2.4 GHZ signal paths and may utilize the same FEM circuitry 200 as the one used for WLAN communications.

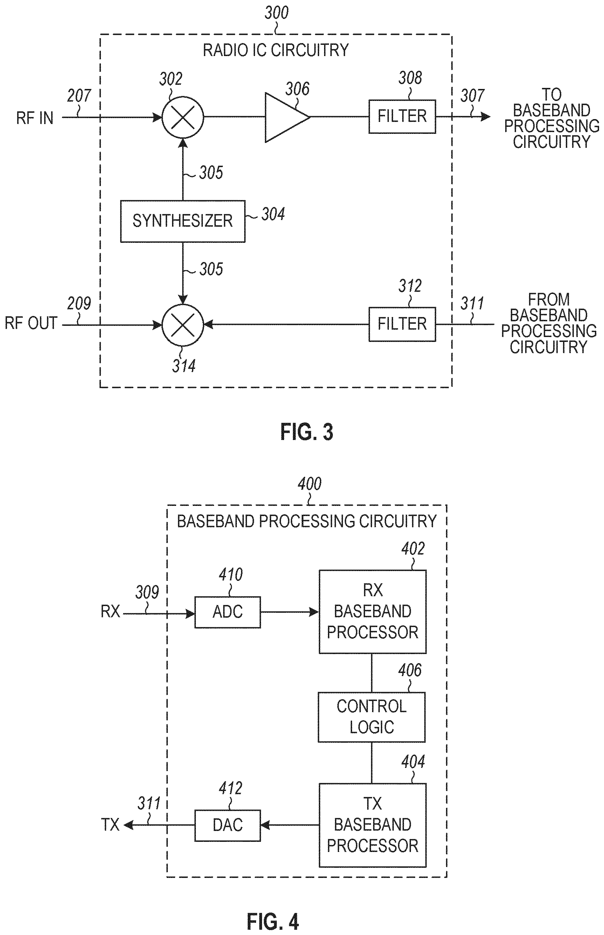

FIG. 3 illustrates radio integrated circuit (IC) circuitry 300 in accordance with some embodiments. The radio IC circuitry 300 is one example of circuitry that may be suitable for use as the WLAN or BT radio IC circuitry 106A/106B (FIG. 1), although other circuitry configurations may also be suitable.

In some embodiments, the radio IC circuitry 300 may include a receive signal path and a transmit signal path. The receive signal path of the radio IC circuitry 300 may include at least mixer circuitry 302, such as, for example, down-conversion mixer circuitry, amplifier circuitry 306 and filter circuitry 308. The transmit signal path of the radio IC circuitry 300 may include at least filter circuitry 312 and mixer circuitry 314, such as, for example, up-conversion mixer circuitry. Radio IC circuitry 300 may also include synthesizer circuitry 304 for synthesizing a frequency 305 for use by the mixer circuitry 302 and the mixer circuitry 314. The mixer circuitry 302 and/or 314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. Fig. 3 illustrates only a simplified version of a radio IC circuitry, and may include, although not shown, embodiments where each of the depicted circuitries may include more than one component. For instance, mixer circuitry 320 and/or 314 may each include one or more mixers, and filter circuitries 308 and/or 312 may each include one or more filters, such as one or more BPFs and/or LPFs according to application needs. For example, when mixer circuitries are of the direct-conversion type, they may each include two or more mixers.

In some embodiments, mixer circuitry 302 may be configured to down-convert RF signals 207 received from the FEM circuitry 104 (FIG. 1) based on the synthesized frequency 305 provided by synthesizer circuitry 304. The amplifier circuitry 306 may be configured to amplify the down-converted signals and the filter circuitry 308 may include a LPF configured to remove unwanted signals from the down-converted signals to generate output baseband signals 307. Output baseband signals 307 may be provided to the baseband processing circuitry 108 (FIG. 1) for further processing. In some embodiments, the output baseband signals 307 may be zero-frequency baseband signals, although this is not a requirement. In some embodiments, mixer circuitry 302 may comprise passive mixers, although the scope of the embodiments is not limited in this respect.

In some embodiments, the mixer circuitry 314 may be configured to up-convert input baseband signals 311 based on the synthesized frequency 305 provided by the synthesizer circuitry 304 to generate RF output signals 209 for the FEM circuitry 104. The baseband signals 311 may be provided by the baseband processing circuitry 108 and may be filtered by filter circuitry 312. The filter circuitry 312 may include a LPF or a BPF, although the scope of the embodiments is not limited in this respect.

In some embodiments, the mixer circuitry 302 and the mixer circuitry 314 may each include two or more mixers and may be arranged for quadrature down-conversion and/or up-conversion respectively with the help of synthesizer 304. In some embodiments, the mixer circuitry 302 and the mixer circuitry 314 may each include two or more mixers each configured for image rejection (e.g., Hartley image rejection). In some embodiments, the mixer circuitry 302 and the mixer circuitry 314 may be arranged for direct down-conversion and/or direct up-conversion, respectively. In some embodiments, the mixer circuitry 302 and the mixer circuitry 314 may be configured for super-heterodyne operation, although this is not a requirement.

Mixer circuitry 302 may comprise, according to one embodiment: quadrature passive mixers (e.g., for the in-phase (I) and quadrature phase (Q) paths). In such an embodiment, RF input signal 207 from Fig. 3 may be down-converted to provide I and Q baseband output signals to be sent to the baseband processor

Quadrature passive mixers may be driven by zero and ninety-degree time-varying LO switching signals provided by a quadrature circuitry which may be configured to receive a LO frequency (f_{LO}) from a local oscillator or a synthesizer, such as LO frequency 305 of synthesizer 304 (FIG. 3). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have a 25% duty cycle and a 50% offset. In some embodiments, each branch of the mixer circuitry (e.g., the in-phase (I) and quadrature phase (Q) path) may operate at a 25% duty cycle, which may result in a significant reduction is power consumption.

The RF input signal 207 (FIG. 2) may comprise a balanced signal, although the scope of the embodiments is not limited in this respect. The I and Q baseband output signals may be provided to low-nose amplifier, such as amplifier circuitry 306 (FIG. 3) or to filter circuitry 308 (FIG. 3).

In some embodiments, the output baseband signals 307 and the input baseband signals 311 may be analog baseband signals, although the scope of the embodiments is not limited in this respect. In some alternate embodiments, the output baseband signals 307 and the input baseband signals 311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 304 may be a fractional-N synthesizer or a fractional N/N+1 synthesizer, although the scope of the embodiments is not limited in this respect as other types of frequency synthesizers may be suitable. For example, synthesizer circuitry 304 may be a delta-sigma synthesizer, a frequency multiplier, or a synthesizer comprising a phase-locked loop with a frequency divider. According to some embodiments, the synthesizer circuitry 304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 304 may be provided by a voltage controlled oscillator (VCO), although that is not a requirement. A divider control input may further be provided by either the baseband processing circuitry 108 (FIG. 1) or the application processor 111 (FIG. 1) depending on the desired output frequency 305. In some embodiments, a divider control input (e.g., N) may be determined from a look-up table (e.g., within a Wi-Fi card) based on a channel number and a channel center frequency as determined or indicated by the application processor 111.

In some embodiments, synthesizer circuitry 304 may be configured to generate a carrier frequency as the output frequency 305, while in other embodiments, the output frequency 305 may be a fraction of the carrier frequency (e.g., one-half the carrier frequency, one-third the carrier frequency). In some embodiments, the output frequency 305 may be a LO frequency (f_{LO}).

FIG. 4 illustrates a functional block diagram of baseband processing circuitry 400 in accordance with some embodiments. The baseband processing circuitry 400 is one example of circuitry that may be suitable for use as the baseband processing circuitry 108 (FIG. 1), although other circuitry configurations may also be suitable. The baseband processing circuitry 400 may include a receive baseband processor (RX BBP) 402 for processing receive baseband signals 309 provided by the radio IC circuitry 106 (FIG. 1) and a transmit baseband processor (TX BBP) 404 for generating transmit baseband signals 311 for the radio IC circuitry 106. The baseband processing circuitry 400 may also include control logic 406 for coordinating the operations of the baseband processing circuitry 400.

In some embodiments (e.g., when analog baseband signals are exchanged between the baseband processing circuitry 400 and the radio IC circuitry 106), the baseband processing circuitry 400 may include ADC 410 to convert analog baseband signals received from the radio IC circuitry 106 to digital baseband signals for processing by the RX BBP 402. In these embodiments, the baseband processing circuitry 400 may also include DAC 412 to convert digital baseband signals from the TX BBP 404 to analog baseband signals.

In some embodiments that communicate OFDM signals or OFDMA signals, such as through baseband processor 108A, the transmit baseband processor 404 may be configured to generate OFDM or OFDMA signals as appropriate for transmission by performing an inverse fast Fourier transform (IFFT). The receive baseband processor 402 may be configured to process received OFDM signals or OFDMA signals by performing an FFT. In some embodiments, the receive baseband processor 402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring to FIG. 1, in some embodiments, the antennas 101 (FIG. 1) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 101 may each include a set of phased-array antennas, although embodiments are not so limited.

Although the radio-architecture 100 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

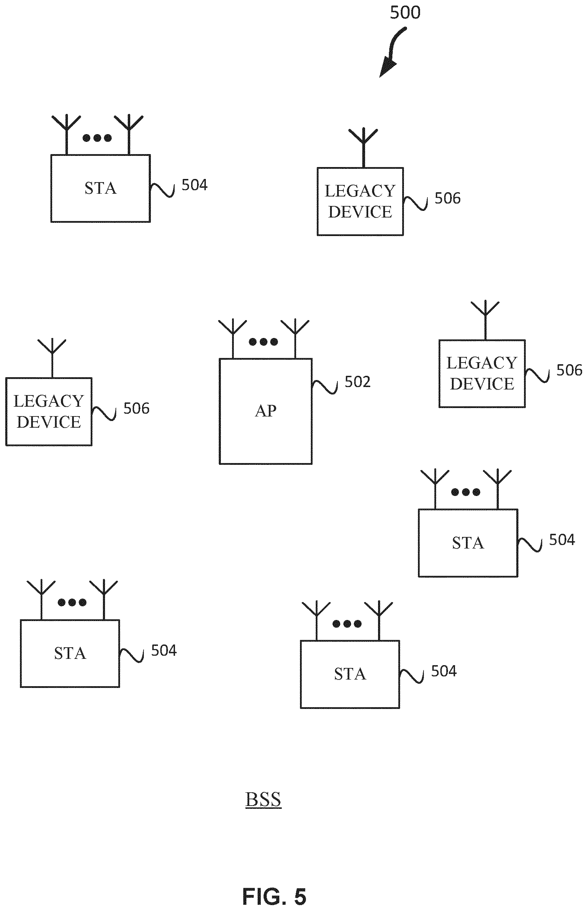

FIG. 5 illustrates a WLAN 500 in accordance with some embodiments. The WLAN 500 may comprise a basis service set (BSS) that may include an access point (AP) 502, a plurality of stations (STAs) 504, and a plurality of legacy devices 506. In some embodiments, the STAs 504 and/or AP 502 are configured to operate in accordance with IEEE 802.11be extremely high throughput (EHT) and/or high efficiency (HE) IEEE 802.11ax. In some embodiments, the STAs 504 and/or AP 520 are configured to operate in accordance with IEEE 802.11az. In some embodiments, IEEE 802.11EHT may be termed Next Generation 802.11. The STA 504 and AP 502 (or apparatuses of) may be configured to operate in accordance with IEEE P802.11be^{™}/D1.2, September 2021, IEEE P802.11ax^{™}/D8.0, October 2020, and/or IEEE Std 802.11^{™}-2020, which are incorporated herein by reference in their entirety. The AP 502 and/or STA 504 may operate in accordance with different versions of the communication standards.

The AP 502 may be an AP using the IEEE 802.11 to transmit and receive. The AP 502 may be a base station. The AP 502 may use other communications protocols as well as the IEEE 802.11 protocol. The EHT protocol may be termed a different name in accordance with some embodiments. The IEEE 802.11 protocol may include using orthogonal frequency division multiple-access (OFDMA), time division multiple access (TDMA), and/or code division multiple access (CDMA). The IEEE 802.11 protocol may include a multiple access technique. For example, the IEEE 802.11 protocol may include space-division multiple access (SDMA) and/or multiple-user multiple-input multiple-output (MU-MIMO). There may be more than one EHT AP 502 that is part of an extended service set (ESS). A controller (not illustrated) may store information that is common to the more than one APs 502 and may control more than one BSS, e.g., assign primary channels, colors, etc. AP 502 may be connected to the internet.

The legacy devices 506 may operate in accordance with one or more of IEEE 802.11 a/b/g/n/ac/ad/af/ah/aj/ay/ax, or another legacy wireless communication standard. The legacy devices 506 may be STAs or IEEE STAs. The STAs 504 may be wireless transmit and receive devices such as cellular telephone, portable electronic wireless communication devices, smart telephone, handheld wireless device, wireless glasses, wireless watch, wireless personal device, tablet, or another device that may be transmitting and receiving using the IEEE 802.11 protocol such as IEEE 802.11be or another wireless protocol.

The AP 502 may communicate with legacy devices 506 in accordance with legacy IEEE 802.11 communication techniques. In example embodiments, the H AP 502 may also be configured to communicate with STAs 504 in accordance with legacy IEEE 802.11 communication techniques.

In some embodiments, a HE or EHT frames may be configurable to have the same bandwidth as a channel. The HE or EHT frame may be a physical Layer (PHY) Protocol Data Unit (PPDU). In some embodiments, PPDU may be an abbreviation for physical layer protocol data unit (PPDU). In some embodiments, there may be different types of PPDUs that may have different fields and different physical layers and/or different media access control (MAC) layers. For example, a single user (SU) PPDU, multiple-user (MU) PPDU, extended-range (ER) SU PPDU, and/or trigger-based (TB) PPDU. In some embodiments EHT may be the same or similar as HE PPDUs.

The bandwidth of a channel may be 20MHz, 40MHz, or 80MHz, 80+80MHz, 160MHz, 160+160MHz, 320MHz, 320+320MHz, 640MHz bandwidths. In some embodiments, the bandwidth of a channel less than 20 MHz may be 1 MHz, 1.25MHz, 2.03MHz, 2.5MHz, 4.06 MHz, 5MHz and 10MHz, or a combination thereof or another bandwidth that is less or equal to the available bandwidth may also be used. In some embodiments the bandwidth of the channels may be based on a number of active data subcarriers. In some embodiments the bandwidth of the channels is based on 26, 52, 106, 242, 484, 996, or 2x996 active data subcarriers or tones that are spaced by 20 MHz. In some embodiments the bandwidth of the channels is 256 tones spaced by 20 MHz. In some embodiments the channels are multiple of 26 tones or a multiple of 20 MHz. In some embodiments a 20 MHz channel may comprise 242 active data subcarriers or tones, which may determine the size of a Fast Fourier Transform (FFT). An allocation of a bandwidth or a number of tones or sub-carriers may be termed a resource unit (RU) allocation in accordance with some embodiments.

In some embodiments, the 26-subcarrier RU and 52-subcarrier RU are used in the 20 MHz, 40 MHz, 80 MHz, 160 MHz and 80+80 MHz OFDMA HE PPDU formats. In some embodiments, the 106-subcarrier RU is used in the 20 MHz, 40 MHz, 80 MHz, 160 MHz and 80+80 MHz OFDMA and MU-MIMO HE PPDU formats. In some embodiments, the 242-subcarrier RU is used in the 40 MHz, 80 MHz, 160 MHz and 80+80 MHz OFDMA and MU-MIMO HE PPDU formats. In some embodiments, the 484-subcarrier RU is used in the 80 MHz, 160 MHz and 80+80 MHz OFDMA and MU-MIMO HE PPDU formats. In some embodiments, the 996-subcarrier RU is used in the 160 MHz and 80+80 MHz OFDMA and MU-MIMO HE PPDU formats.

A HE or EHT frame may be configured for transmitting a number of spatial streams, which may be in accordance with MU-MIMO and may be in accordance with OFDMA. In other embodiments, the AP 502, STA 504, and/or legacy device 506 may also implement different technologies such as code division multiple access (CDMA) 2000, CDMA 2000 IX, CDMA 2000 Evolution-Data Optimized (EV-DO), Interim Standard 2000 (IS-2000), Interim Standard 95 (IS-95), Interim Standard 856 (IS-856), Long Term Evolution (LTE), Global System for Mobile communications (GSM), Enhanced Data rates for GSM Evolution (EDGE), GSM EDGE (GERAN), IEEE 802.16 (i.e., Worldwide Interoperability for Microwave Access (WiMAX)), BlueTooth^{®}, low-power BlueTooth^{®}, or other technologies.

In accordance with some IEEE 802.11 embodiments, e.g, IEEE 802.11EHT/ax embodiments, a HE AP 502 may operate as a master station which may be arranged to contend for a wireless medium (e.g., during a contention period) to receive exclusive control of the medium for a transmission opportunity (TXOP). The AP 502 may transmit an EHT/HE trigger frame transmission, which may include a schedule for simultaneous UL/DL transmissions from STAs 504. The AP 502 may transmit a time duration of the TXOP and sub-channel information. During the TXOP, STAs 504 may communicate with the AP 502 in accordance with a non-contention based multiple access technique such as OFDMA or MU-MIMO. This is unlike conventional WLAN communications in which devices communicate in accordance with a contention-based communication technique, rather than a multiple access technique. During the HE or EHT control period, the AP 502 may communicate with stations 504 using one or more HE or EHT frames. During the TXOP, the HE STAs 504 may operate on a sub-channel smaller than the operating range of the AP 502. During the TXOP, legacy stations refrain from communicating. The legacy stations may need to receive the communication from the HE AP 502 to defer from communicating.

In accordance with some embodiments, during the TXOP the STAs 504 may contend for the wireless medium with the legacy devices 506 being excluded from contending for the wireless medium during the master-sync transmission. In some embodiments the trigger frame may indicate an UL-MU-MIMO and/or UL OFDMA TXOP. In some embodiments, the trigger frame may include a DL UL-MU-MIMO and/or DL OFDMA with a schedule indicated in a preamble portion of trigger frame.

In some embodiments, the multiple-access technique used during the HE or EHT TXOP may be a scheduled OFDMA technique, although this is not a requirement. In some embodiments, the multiple access technique may be a time-division multiple access (TDMA) technique or a frequency division multiple access (FDMA) technique. In some embodiments, the multiple access technique may be a space-division multiple access (SDMA) technique. In some embodiments, the multiple access technique may be a Code division multiple access (CDMA).

The AP 502 may also communicate with legacy stations 506 and/or STAs 504 in accordance with legacy IEEE 802.11 communication techniques. In some embodiments, the AP 502 may also be configurable to communicate with STAs 504 outside the TXOP in accordance with legacy IEEE 802.11 or IEEE 802.11EHT/ax communication techniques, although this is not a requirement.

In some embodiments the STA 504 may be a "group owner" (GO) for peer-to-peer modes of operation. A wireless device may be a STA 502 or a HE AP 502.

In some embodiments, the STA 504 and/or AP 502 may be configured to operate in accordance with IEEE 802.11mc. In example embodiments, the radio architecture of FIG. 1 is configured to implement the STA 504 and/or the AP 502. In example embodiments, the front-end module circuitry of FIG. 2 is configured to implement the STA 504 and/or the AP 502. In example embodiments, the radio IC circuitry of FIG. 3 is configured to implement the HE station 504 and/or the AP 502. In example embodiments, the base-band processing circuitry of FIG. 4 is configured to implement the STA 504 and/or the AP 502.

In example embodiments, the STAs 504, AP 502, an apparatus of the STA 504, and/or an apparatus of the AP 502 may include one or more of the following: the radio architecture of FIG. 1, the front-end module circuitry of FIG. 2, the radio IC circuitry of FIG. 3, and/or the base-band processing circuitry of FIG. 4.

In example embodiments, the radio architecture of FIG. 1, the front-end module circuitry of FIG. 2, the radio IC circuitry of FIG. 3, and/or the base-band processing circuitry of FIG. 4 may be configured to perform the methods and operations/functions herein described in conjunction with FIGS. 1-14.

In example embodiments, the STAs 504 and/or the HE AP 502 are configured to perform the methods and operations/functions described herein in conjunction with FIGS. 1-14. In example embodiments, an apparatus of the STA 504 and/or an apparatus of the AP 502 are configured to perform the methods and functions described herein in conjunction with FIGS. 1-14. The term Wi-Fi may refer to one or more of the IEEE 802.11 communication standards. AP and STA may refer to EHT/HE access point and/or EHT/HE station as well as legacy devices 506.

In some embodiments, a HE AP STA may refer to an AP 502 and/or STAs 504 that are operating as EHT APs 502. In some embodiments, when a STA 504 is not operating as an AP, it may be referred to as a non-AP STA or non-AP. In some embodiments, STA 504 may be referred to as either an AP STA or a non-AP.

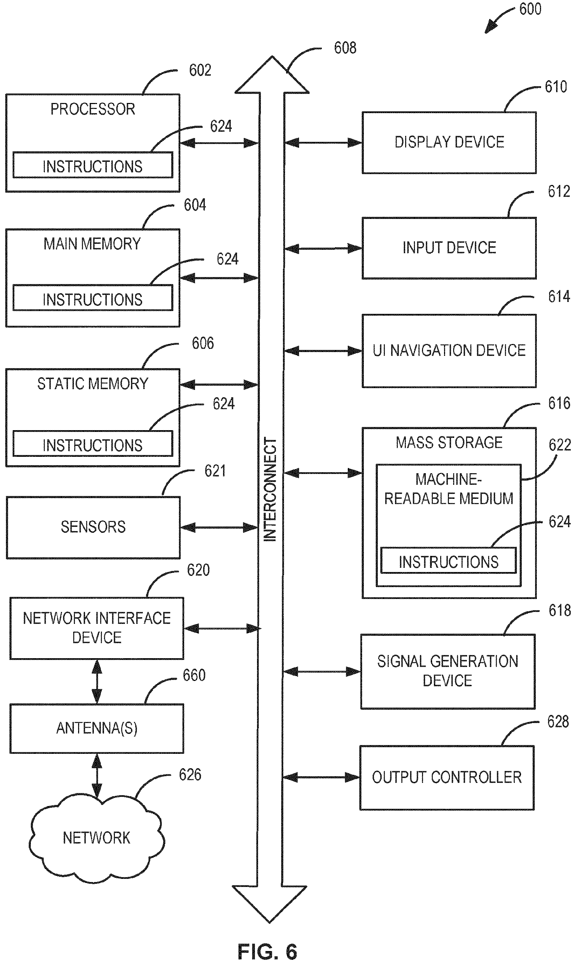

FIG. 6 illustrates a block diagram of an example machine 600 upon which any one or more of the techniques (e.g., methodologies) discussed herein may perform. In alternative embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environment. The machine 600 may be a HE AP 502, EVT station 504, personal computer (PC), a tablet PC, a set-top box (STB), a personal digital assistant (PDA), a portable communications device, a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via an interlink (e.g., bus) 608.

Specific examples of main memory 604 include Random Access Memory (RAM), and semiconductor memory devices, which may include, in some embodiments, storage locations in semiconductors such as registers. Specific examples of static memory 606 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

The machine 600 may further include a display device 610, an input device 612 (e.g., a keyboard), and a user interface (UI) navigation device 614 (e.g., a mouse). In an example, the display device 610, input device 612 and UI navigation device 614 may be a touch screen display. The machine 600 may additionally include a mass storage (e.g., drive unit) 616, a signal generation device 618 (e.g., a speaker), a network interface device 620, and one or more sensors 621, such as a global positioning system (GPS) sensor, compass, accelerometer, or other sensor. The machine 600 may include an output controller 628, such as a serial (e.g., universal serial bus (USB), parallel, or other wired or wireless (e.g., infrared(IR), near field communication (NFC), etc.) connection to communicate or control one or more peripheral devices (e.g., a printer, card reader, etc.). In some embodiments the processor 602 and/or instructions 624 may comprise processing circuitry and/or transceiver circuitry.

The storage device 616 may include a machine readable medium 622 on which is stored one or more sets of data structures or instructions 624 (e.g., software) embodying or utilized by any one or more of the techniques or functions described herein. The instructions 624 may also reside, completely or at least partially, within the main memory 604, within static memory 606, or within the hardware processor 602 during execution thereof by the machine 600. In an example, one or any combination of the hardware processor 602, the main memory 604, the static memory 606, or the storage device 616 may constitute machine readable media.

Specific examples of machine readable media may include: non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine readable medium 622 is illustrated as a single medium, the term "machine readable medium" may include a single medium or multiple media (e.g., a centralized or distributed database, and/or associated caches and servers) configured to store the one or more instructions 624.

An apparatus of the machine 600 may be one or more of a hardware processor 602 (e.g., a central processing unit (CPU), a graphics processing unit (GPU), a hardware processor core, or any combination thereof), a main memory 604 and a static memory 606, sensors 621, network interface device 620, antennas 660, a display device 610, an input device 612, a UI navigation device 614, a mass storage 616, instructions 624, a signal generation device 618, and an output controller 628. The apparatus may be configured to perform one or more of the methods and/or operations disclosed herein. The apparatus may be intended as a component of the machine 600 to perform one or more of the methods and/or operations disclosed herein, and/or to perform a portion of one or more of the methods and/or operations disclosed herein. In some embodiments, the apparatus may include a pin or other means to receive power. In some embodiments, the apparatus may include power conditioning hardware.

The term "machine readable medium" may include any medium that is capable of storing, encoding, or carrying instructions for execution by the machine 600 and that cause the machine 600 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine-readable media. In some examples, machine readable media may include machine readable media that is not a transitory propagating signal.

The instructions 624 may further be transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others.

In an example, the network interface device 620 may include one or more physical jacks (e.g., Ethernet, coaxial, or phone jacks) or one or more antennas to connect to the communications network 626. In an example, the network interface device 620 may include one or more antennas 660 to wirelessly communicate using at least one of single-input multiple-output (SIMO), multiple-input multiple-output (MIMO), or multiple-input single-output (MISO) techniques. In some examples, the network interface device 620 may wirelessly communicate using Multiple User MIMO techniques. The term "transmission medium" shall be taken to include any intangible medium that is capable of storing, encoding or carrying instructions for execution by the machine 600, and includes digital or analog communications signals or other intangible medium to facilitate communication of such software.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; flash memory, etc.

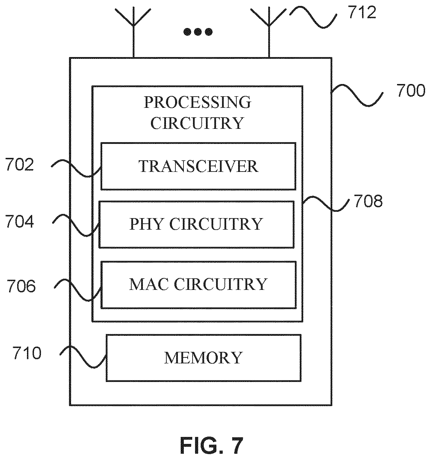

FIG. 7 illustrates a block diagram of an example wireless device 700 upon which any one or more of the techniques (e.g., methodologies or operations) discussed herein may perform. The wireless device 700 may be a HE device or HE wireless device. The wireless device 700 may be a HE STA 504, HE AP 502, and/or a HE STA or HE AP. A HE STA 504, HE AP 502, and/or a HE AP or HE STA may include some or all of the components shown in FIGS. 1-7. The wireless device 700 may be an example machine 600 as disclosed in conjunction with FIG. 6.

The wireless device 700 may include processing circuitry 708. The processing circuitry 708 may include a transceiver 702, physical layer circuitry (PHY circuitry) 704, and MAC layer circuitry (MAC circuitry) 706, one or more of which may enable transmission and reception of signals to and from other wireless devices 700 (e.g., HE AP 502, HE STA 504, and/or legacy devices 506) using one or more antennas 712. As an example, the PHY circuitry 704 may perform various encoding and decoding functions that may include formation of baseband signals for transmission and decoding of received signals. As another example, the transceiver 702 may perform various transmission and reception functions such as conversion of signals between a baseband range and a Radio Frequency (RF) range.

Accordingly, the PHY circuitry 704 and the transceiver 702 may be separate components or may be part of a combined component, e.g., processing circuitry 708. In addition, some of the described functionality related to transmission and reception of signals may be performed by a combination that may include one, any or all of the PHY circuitry 704 the transceiver 702, MAC circuitry 706, memory 710, and other components or layers. The MAC circuitry 706 may control access to the wireless medium. The wireless device 700 may also include memory 710 arranged to perform the operations described herein, e.g., some of the operations described herein may be performed by instructions stored in the memory 710.

The antennas 712 (some embodiments may include only one antenna) may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 712 may be effectively separated to take advantage of spatial diversity and the different channel characteristics that may result.

One or more of the memory 710, the transceiver 702, the PHY circuitry 704, the MAC circuitry 706, the antennas 712, and/or the processing circuitry 708 may be coupled with one another. Moreover, although memory 710, the transceiver 702, the PHY circuitry 704, the MAC circuitry 706, the antennas 712 are illustrated as separate components, one or more of memory 710, the transceiver 702, the PHY circuitry 704, the MAC circuitry 706, the antennas 712 may be integrated in an electronic package or chip.

In some embodiments, the wireless device 700 may be a mobile device as described in conjunction with FIG. 6. In some embodiments the wireless device 700 may be configured to operate in accordance with one or more wireless communication standards as described herein (e.g., as described in conjunction with FIGS. 1-6, IEEE 802.11). In some embodiments, the wireless device 700 may include one or more of the components as described in conjunction with FIG. 6 (e.g., display device 610, input device 612, etc.) Although the wireless device 700 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

In some embodiments, an apparatus of or used by the wireless device 700 may include various components of the wireless device 700 as shown in FIG. 7 and/or components from FIGS. 1-6. Accordingly, techniques and operations described herein that refer to the wireless device 700 may be applicable to an apparatus for a wireless device 700 (e.g., HE AP 502 and/or HE STA 504), in some embodiments. In some embodiments, the wireless device 700 is configured to decode and/or encode signals, packets, and/or frames as described herein, e.g., PPDUs.

In some embodiments, the MAC circuitry 706 may be arranged to contend for a wireless medium during a contention period to receive control of the medium for a HE TXOP and encode or decode an HE PPDU. In some embodiments, the MAC circuitry 706 may be arranged to contend for the wireless medium based on channel contention settings, a transmitting power level, and a clear channel assessment level (e.g., an energy detect level).

The PHY circuitry 704 may be arranged to transmit signals in accordance with one or more communication standards described herein. For example, the PHY circuitry 704 may be configured to transmit a HE PPDU. The PHY circuitry 704 may include circuitry for modulation/demodulation, upconversion/downconversion, filtering, amplification, etc. In some embodiments, the processing circuitry 708 may include one or more processors. The processing circuitry 708 may be configured to perform functions based on instructions being stored in a RAM or ROM, or based on special purpose circuitry. The processing circuitry 708 may include a processor such as a general purpose processor or special purpose processor. The processing circuitry 708 may implement one or more functions associated with antennas 712, the transceiver 702, the PHY circuitry 704, the MAC circuitry 706, and/or the memory 710. In some embodiments, the processing circuitry 708 may be configured to perform one or more of the functions/operations and/or methods described herein.

In mmWave technology, communication between a station (e.g., the HE stations 504 of FIG. 5 or wireless device 700) and an access point (e.g., the HE AP 502 of FIG. 5 or wireless device 700) may use associated effective wireless channels that are highly directionally dependent. To accommodate the directionality, beamforming techniques may be utilized to radiate energy in a certain direction with certain beamwidth to communicate between two devices. The directed propagation concentrates transmitted energy toward a target device in order to compensate for significant energy loss in the channel between the two communicating devices. Using directed transmission may extend the range of the millimeter-wave communication versus utilizing the same transmitted energy in omni-directional propagation.

A technical problem is how to provide low-latency communications to STAs 504 within a BSS 500 to support applications that require low-latency communications. When one STA 504 uses the medium to communicate with the serving AP 502 or vice-versa, the channel is busy on that channel and the channel resource cannot be reused by other STAs 504 in the neighborhood that have their clear channel assessment (CCA) indicating busy from the transmissions between the STA 504 and the AP 502.

Depending on the duration of the TxOP or PPDU, the medium can stay busy for a long time. The medium can be busy because of STAs 504 or APs 502 within the same BSS or in different overlapping BSS (OBSS).

If an AP 502 in a BSS 500 wants to ensure a worst-case latency for the transmissions from the AP 502 and from STAs 504, then the AP 502 has to account for the different times: 1) Time to access the medium (time it must wait until channel becomes idle, plus contention with other STAs), and 2) Time to transmit over the air and get acknowledgement. Plus, a retransmission time, if needed.

When the worst-case latency becomes low and when the channel is loaded (many STAs 504 and/or OBSSs in the area), the most significant issue is (1), which is the time to access the medium. In order to reduce the time to access the medium, the AP 502 can enforce lowering the TxOP duration and maximum PPDU durations and hope that neighboring APs 502 do the same. The AP 502 may alternate quickly between uplink (UL) and downlink (DL) transmissions and to provide opportunities for STAs 504 to request and/or transmit urgent packets in an attempt to minimize latency for this case.

However, this approach to reduce latency for STAs 504 has limitations. Because an OBSS may not be respecting the rules outlined above and efficiency is reduced with smaller TxOP sizes. Another approach is preemption, which allows for a STA 504 and/or AP 502 to send information to the peer STA 504 and/or AP 502 to stop ongoing transmissions (preempt the transmission) in order to give back the channel/medium to the STA 504 that has urgent packets.

However, for preemption to work in all scenarios requires: (1) a way to communicate between STA 504 and APs 502 even when the main channel is busy, and (2) a way to stop an ongoing PPDU transmission in the middle to give the medium to the STA 504 with the urgent communication.

In some embodiments the technical problem is addressed by permitting STAs 504 to communicate to the AP 502 during a TXOP. For example, during a portion of the time when an UL TB PPDU is to be transmitted on a resource unit (RU). The embodiment allows a STA 504 that is scheduled by a trigger frame to delay its transmission of its UL TB PPDU during an assigned RU allocation. This delay would be longer than the current rules of transmitting after waiting a short interframe space (SIFS) time. Further, the technical problem is addressed by allowing any STA 504 (or any STAs within a group of STAs) to start transmitting on a specific RU at a time that is later than SIFS after the trigger frame is received. The RU may be considered a random-access RU where STAs may use the RU after a SIFS of receiving the trigger frame to transmit urgent packets or requests to the AP 502. Clear channel assessment (CCA) may have to checked on that RU to avoid collisions. This embodiment allows a STA 504 to transmit an urgent packet or request, even if the AP 502 is not aware that the STA 504 has an urgent packet to send, and it also allows a STA 504 that is scheduled at a specific time and receives a trigger frame to get more degrees of freedom in case the urgent packet it has to send has not yet arrived in the STA's 504 transmit queue. Additionally, the STA 504 may have a schedule when to transmit packets and by permitting the STA 504 to begin a transmission after the SIFS enables more flexibility when the STA 504 transmits the urgent packet. Moreover, the random-access RUs enable any STA 504 within the BSS 500 the opportunity to transmit an urgent packet.

Additionally, the technical problem is addressed by multiplexing multiple transmission in on an RU during a TXOP. The multiplexing permits a STA to transmit an urgent packet or request, even if the AP is not aware that the STA has an urgent packet to send, and it also allows a STA that is scheduled at a specific time and receives a trigger frame to get more degrees of freedom in case the packet it has to send has not yet arrived in its queue. The STA can take advantage of multiplexing, delayed start, and/or random access to transmit time-sensitive data during the TXOP on an RU with minimal latency. This creates the express channel access service expected from a frame preemption feature.

In many applications that need low worst-case latency guarantees the time-sensitive traffic pattern is known and usually deterministic. Therefore, the transmitting STA has information (from higher layers) on the expected arrival of the next packet. Some embodiments enable the STA to take advantage of ongoing UL TB PPDUs to insert time-sensitive data within the PPDU with minimal latency. This enables the express channel access service expected from a frame preemption feature.

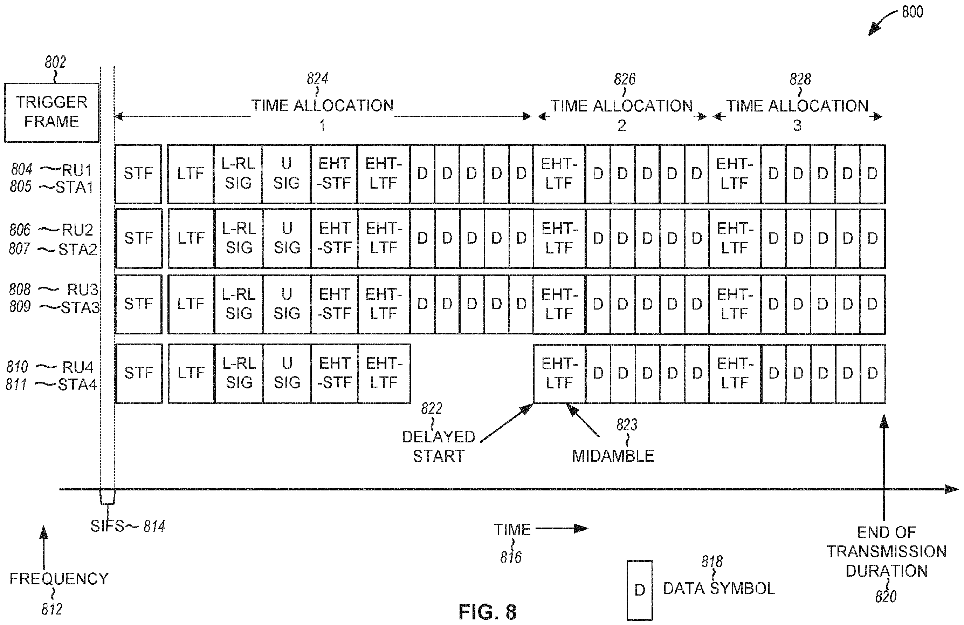

FIG. 8 illustrates a method 800 for a trigger frame with multiple start times, in accordance with some embodiments. FIG. 8 illustrates time 816 along a horizontal axis and frequency 812 along a vertical axis. The data symbols 818 are illustrated narrower than the other symbols however this is only for the purposes of fitting the illustration on a page.

An AP 502 transmits a trigger frame 802 that schedules a STA (or multiple STAs) for UL TB PPDU transmission. The STF, LTF, L-RL SIG, EHT-STF, EHT-LTF and D's may be termed a UL TB PPDU. The UL TB PPDU transmission is composed of a preamble and data portion. A delayed UL TB PPDU may not include a preamble, in accordance with some embodiments. In some embodiments, the UL TB PPDU includes a shortened or modified preamble such as only an EHT-LTF or an EHT-LTF and a signal field.

The trigger frame 802 indicates an allocation for STAs, e.g., RU1 804, RU2 806, RU3 808, RU 810, for STA1 805, STA2 807, STA3 809, and STA4 811, respectively. The trigger frame 802 further indicates parameters for that transmission and may define multiple boundaries in time during the TXOP, e.g., time allocation 1 824, time allocation 2 826, and time allocation 3 828. For example, trigger frame 802 may be the same or similar as trigger frame 1200. RU 1212 may indicate an RU for a STA identified by AID 1214. Additional parameters are included for instructing the STAs on how to perform an UL transmission. The UL transmission in response to a trigger frame 802, 1200 may be termed a UL TB PPDU where the UL TB PPDU may be termed a delayed UL TB PPDU or multiple boundary UL TB PPDU, in accordance with some embodiments. The UL TB PPDU may have different formats. The trigger frame 802, 1200 may include a schedule 1217. The schedule 1217 may be explicit, e.g., indicating STAs assigned to RU for each time allocation or time boundary, or the schedule 1217 may be distributed by including some information in the common information 1206 and some information in the per user information 1208. As an example, the per user information 1208 may include an AID 1214, RU 1212, and time allocation 1219. There may be rules such as the default time allocation 1219 is the UL length 1203 of the entire TxOP. The AID 1214 may include values that indicate that random access is permitted where a STAs may compete for using the RU 1212. For example, a STA may need perform a CCA and gain access to the RU starting at the beginning of the time allocation 1219. The time allocation 1219 may be a number that indicates which of the time allocations are included. For example, there may be three time allocations indicated in the common information 1206 and the time allocation 1219 may indicate which of the three time allocations are included in the RU 1212 for AID 1214. Delayed permitted 1216 may indicate whether a delayed start is permitted. In some embodiments, delayed start is permitted on all RUs. In some embodiments, a configuration settings or a field in the trigger frame 802, 1200 indicates whether delayed start is permitted.

In FIG. 8, the STAs are transmitting UL TB PPDUs in accordance with the trigger frame 802, 1200. STA4 811 on RU4 810 is scheduled with allowing a delayed start or a start at time allocation 2 826. STA4 811 is assigned all the time allocations within the frequency range or tones of RU4 810. In some embodiments, STAs can transmit or not on any time allocation but transmit a preamble if they are scheduled for time allocation 1 824. STA4 811 has a delayed start 822 where a EHT-LTF is transmitted at the start of time allocation 2 826 along with data (D).

The boundaries between the time allocations, e.g., time allocation 1 824, time allocation 2 826, and time allocation 3 828, may be scheduled, e.g., as indicated in multiple boundaries 1215, in regular manner in time, e.g., every 10-20 OFDM symbols for instance. The first time allocation may be larger to accommodate different UL TB PPDU formats. Within an RU, we can have multiple time allocations (between each boundaries).

A STA can be scheduled on one or multiple of these time allocations within one RU. If the STA is scheduled in one time allocation within one RU, the STA starts transmitting its UL TB PPDU at the boundary corresponding to that time allocation. For example, STA1 805 at RU1 804 is scheduled for time allocation 1 824 and transmits STF, LTF, L-RL SIG, U SIG, EHT-STF, EHT-LTF, and data (D) at the start of the time allocation, e.g., here it is a SIFS 814 after receiving the trigger frame 802.

Multiple STAs can be multiplexed in time within one RU. For example, RU4 810 includes STA4 811 transmitting an UL TB PPDU (STF, LTF, L-RL SIG, U SIG, EHT-STF, EHT-LTF, D, D, D, D, D) on time allocation 1 824, STA5 813 transmitting on time allocation 2 826, and STA6 815 on time allocation 3 828. In some embodiments, the EHT-LTFs at the beginning of time allocation 2 826 and time allocation 3 828 are not transmitted by STA1 805, STA2 807, and STA3 809, and the EHT-LTF at the start of time allocation 3 828 is not transmitted by STA4 811.

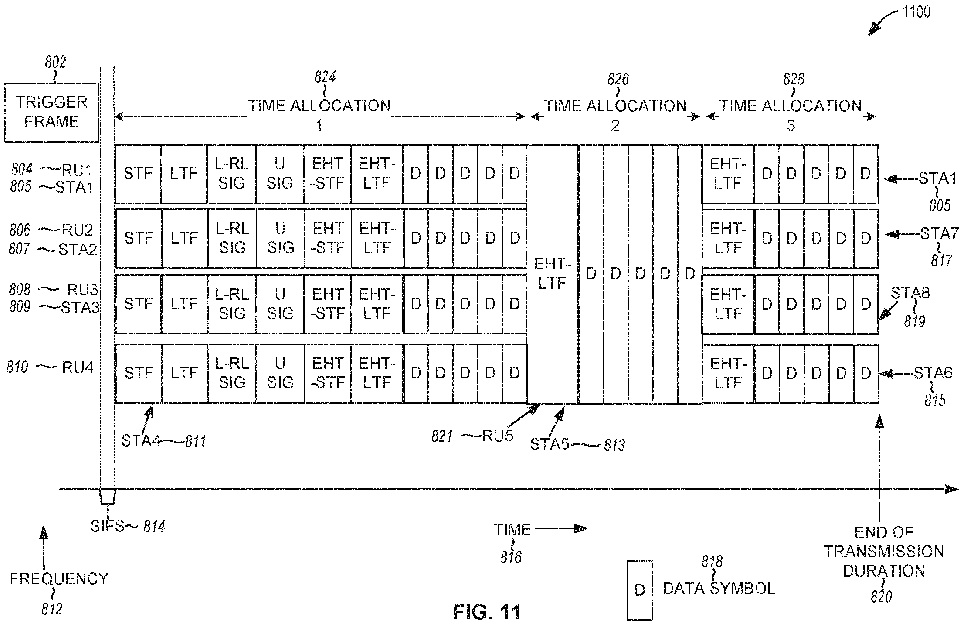

The distribution of RUs may be different on the time boundary, i.e., where a time boundary indicates the start of a time allocation 1 824. In some embodiments, at each time boundary, the RUs between the STAs may change. For example as illustrated in FIG. 11. An example, schedule indicated in the trigger frame 802 may be that during time allocation 1 824 within a 20MHz PPDU, there are 9 26 tone RUs that are assigned to 9 different STAs. During Time allocation 2 within the same 20MHz PPDU, there is only 1 242 tone RU that is assigned to a single STA. In some examples, a midamble is used where an initiator can schedule in midamble transmissions (every 10-20 OFDM symbols), advertised through a signaling in the PLCP header of the PPDU. In FIG. 8, the midamble is the EHT-LTF to be transmitted at the start of time allocation 2 826 and time allocation 3 828 by STA4 on RU4 810. In some examples, the midamble may be different or not present. For example, the midamble may include a short signal field or multiple training fields.

At these times, the STA will transmit an LTF field (or variant) in order to allow channel estimation. Here the midamble defines the boundaries of the time allocations and permits a training field at the beginning of a time allocation, which helps the AP 502 with channel estimation. The training field included in a midamble can be used to perform channel estimation (if there is a new STA scheduled, and possibly to correct some frequency synchronization and/or re-perform AGC. The midamble 823 enables the AP that is receiving the PPDU to know that at each start of a time allocation (time boundary) it can redo channel estimation for all the STAs. This reduces the overhead to send full preamble for that STA, and significantly reduces the complexity of the hardware that will be using the Midamble to do updated channel estimation for the entire bandwidth.

In some embodiments, there are defined intervals allowed for midamble 823 so this provides a known signaling to all STAs that urgent packets will be allowed at the Midamble 823 boundaries. This also allows alignment along symbol boundaries of the new STA transmitting to be aligned with all other STAs, and any misalignment could be combated using the Midamble 823 estimates of the other and new STAs.

The trigger frame 802, 1200 may include an indication of (or advertisement) of regular or unregular boundaries (start of time allocations) per RU or for the entire PPDU. For instance, a flag advertising that such boundaries exist (e.g., multiple boundaries 1215), and a field defining the periodicity 1221 of them. Periodicity1221 may indicate, for example, 5 symbols per time allocation 824. The UL length 1203 can be used to determine a number of time allocations based on the periodicity 1221.

Time allocation 1219 may assign one STA to a particular RU 1212 at a particular boundary or time allocation. Time allocation 1219 may indicate that a STA is assigned all time allocations within the RU 1212.

A schedule STA decodes the trigger frame 802, a scheduled STA will start transmitting at the boundary at which it is scheduled (if it has data to send).

In some embodiments, the STA starts data transmission right away, possibly with differential encoding in order not to require channel estimation. In some embodiments, the STA will start with data transmission right away, assuming it has sent preamble at the very beginning of the UL TB PPDU (after the SIFS 814).

In some embodiments, the STA will start with a short preamble (or midamble 823), which may be a one symbol LTF to enable the AP 502 to perform channel estimation. If a STA is scheduled on 2 consecutive time allocations within one RU, the data flow of the PSDU is continuing as if there was no break, and the receiving will treat the PSDU as if there was no boundary (basically aggregate the 2 PSDUs in the two time allocations and decode/demodulate across the time boundary.

If a STA is scheduled on a single time allocation and stops its transmission at the next time allocation boundary, all its PSDU has to be contained in its time allocation.

In some embodiments, random access is indicated for some RUs/time allocations 1219 based on the value of the AID 1214 or based on another indication in the trigger frame 802, 1200 such as random access 1213. Random access indictes that a STA is not scheduled for a RU/time allocation specifically but a range of STAs can start transmitting after gaining control of the medium to reduce collisions between STAs. The end of transmission duration 820 indicates the end of the transmission opportunity that begins a SIFS 814 after receiving the trigger frame 802, 1200.

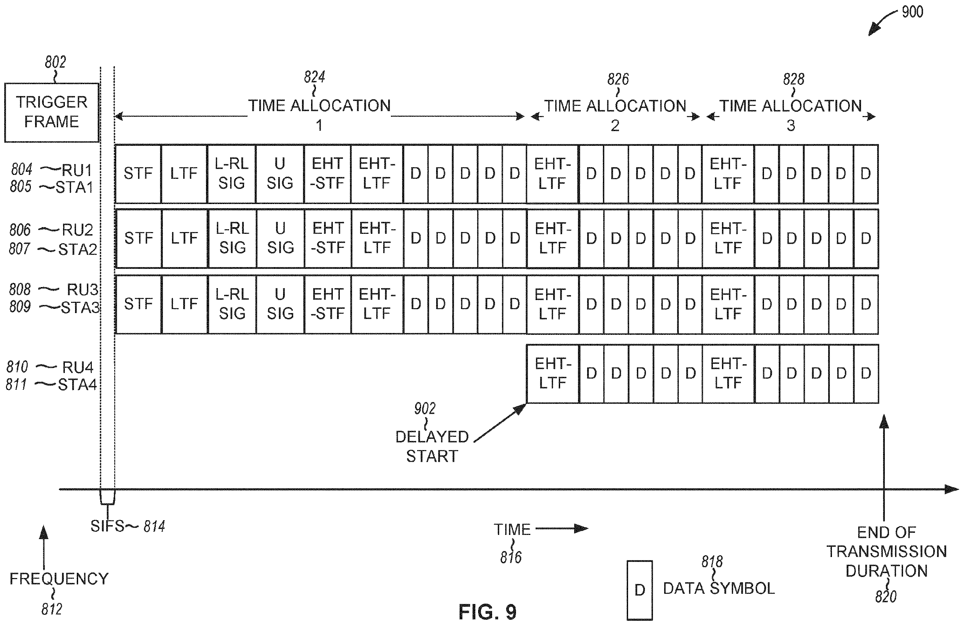

FIG. 9 illustrates a method 900 for a trigger frame with multiple start times, in accordance with some embodiments. STA4 811 is assigned all time allocations, time allocation 1 824, time allocation 2 826, and time allocation 3 828, within RU4 810. STA4 811 can start transmitting on the boundary of any of the time allocations, and will wait until it is ready, which may depend on a time sensitive application at a higher layer. The STA4 811 does not have to transmit a preamble at the beginning of the UL TB PPDU (SIFS after trigger frame), in accordance with some embodiments. In other embodiments, the STA4 811 does transmit a preamble at the beginning of time allocation 1 824. STA4 811 then selects time allocation 2 826 to transmit the delayed start 902 delayed UL TB PPDU, which in this embodiment, includes a preamble or midamble with an EHT-LTF.

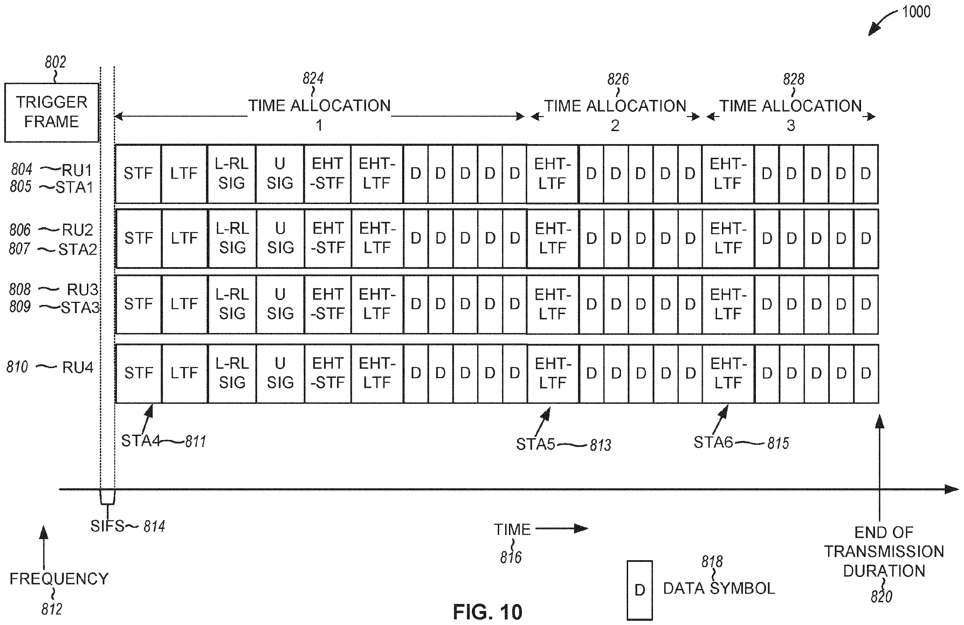

FIG. 10 illustrates a method 1000 for a trigger frame with multiple start times, in accordance with some embodiments. The trigger frame 802, 1200 scheduled RU4 810 with three different STAs, STA4 811, STA5 813, and STA6 816 scheduled during the TXOP. STA4 811 transmits an UL TB PPDU at time allocation 1 824. STA5 813 transmits a preamble or midamble at the start of allocation 2 826 and then transmits data. The STA6 815 transmits a preamble or midamble EHT-LTF at time allocation 3 826 and then transmits data. In this example, only the STA4 811 scheduled for time allocation 1 824 sends the preamble at the beginning of the UL TB PPDU (SIFS after trigger frame 802, 1200). The preamble or midamble may include a signal field and, in some embodiments, is not present.

FIG. 11 illustrates a method 1100 for a trigger frame with multiple start times, in accordance with some embodiments. The trigger frame 802 schedules UL TB PPDUs with three time allocations, time allocation 1 824, time allocation 2 826, and time allocation 3 828. Within each time allocation,different STAs can be scheduled on different RUs.

During time allocation 1 824 and time allocation 3 828, STA1 805 is scheduled for RU1 804. The size of the RUs can change so that during time allocation 2 826 STA5 813 is scheduled on RU5 821 where RU becomes the entire 20 MHz channel (or another size). The STAs may transmit a preamble or midamble. During time allocation 1 824, STA1 805 transmits on RU1 804, STA2 807 transmits on RU2 806, STA3 809 transmit on RU3 808, and STA4 811 transmits on RU4 810. The UL TB PPDUs include a preamble. During time allocation 2 826, STA5 813 transmits on RU5 821. During time allocation 3 828 STA1 805 transmits on RU1 804, STA7 817 transmits on RU2 806, STA8 819 transmit on RU3 808, and STA6 815 transmits on RU4 810. This schedule is indicated in the trigger frame 802, 1200 as disclosed herein. In some embodiments, the order of the per user information 1208 fields indicates which time allocations the per user information applies to. In some embodiments, a table in the communication standard specifies which RU the STA identified by the AID 1214 is to use and for which time allocation(s).

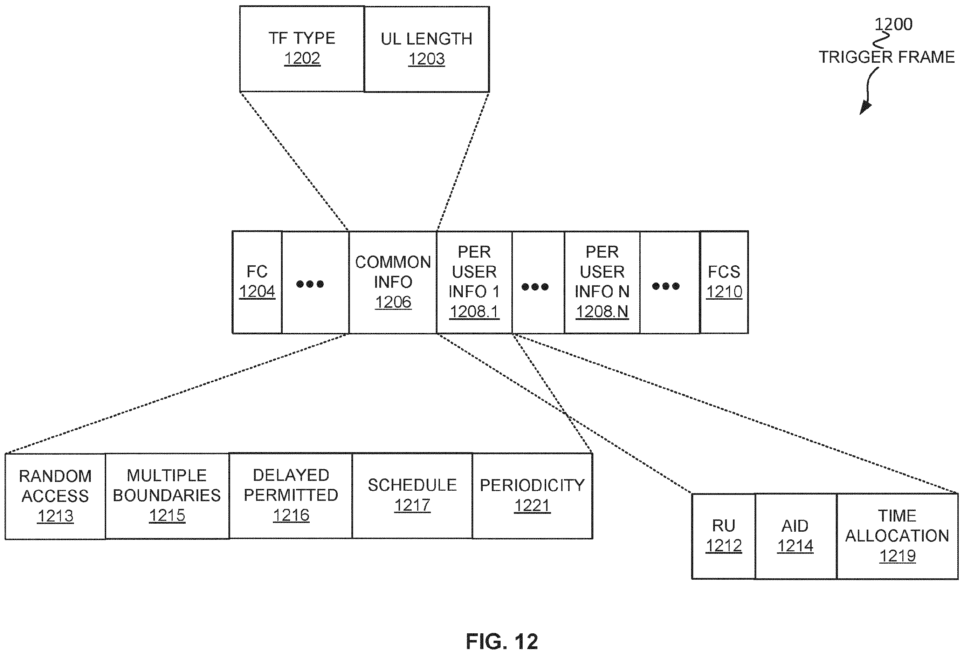

FIG. 12 illustrates a trigger frame 1200, in accordance with some embodiments. The trigger frame (TF) 1200 include a TF type 1202, which may include a type that indicates that delayed transmissions are permitted and/or a type that indicates that delayed transmissions with random access is permitted. The trigger frame 1200 further includes FC 1204, common information 1206, per user information 1208.1 through per user information N 1208.N, FCS 1210, delayed permitted 1216, RU 1212, and AID 1214.

The FC 1204 may include information indicating the type of frame, e.g., MU-RTS, a protocol version (e.g., IEEE 802.11ax), type of frame, trigger frame for CTS responses, etc. The common information 1206 may include information that is common to the STAs 504. The common information 1206 may include information for decoding the trigger frame 1200 or decoding subsequent frames. The common information 1206 may include information for encoding frames to the AP 502 in response to the trigger frame 1200 as well as information regarding the TXOP, e.g., a duration, bandwidths, MCSs, and so forth. The per user info 1208 may include RU 1212, AID 1214, a time allocation 1219, a delayed permitted 1216, as well as other fields. The trigger frame 1200 (and 802) may be in accordance with a format indicated by a communication standard such as EHT with the modifications to permit the delayed transmissions and/or random access. The periodicity 1221 may indicate a number of symbols per time allocation and/or a number of time allocations. The schedule 1217 may indicate a schedule for RU and STAs as disclosed herein. Multiple boundaries 1215 may indicate whether multiple boundaries may be used as disclosed herein. In some embodiments, the RU 1212 indicates both a time allocation(s) and a frequency range or tone allocation.

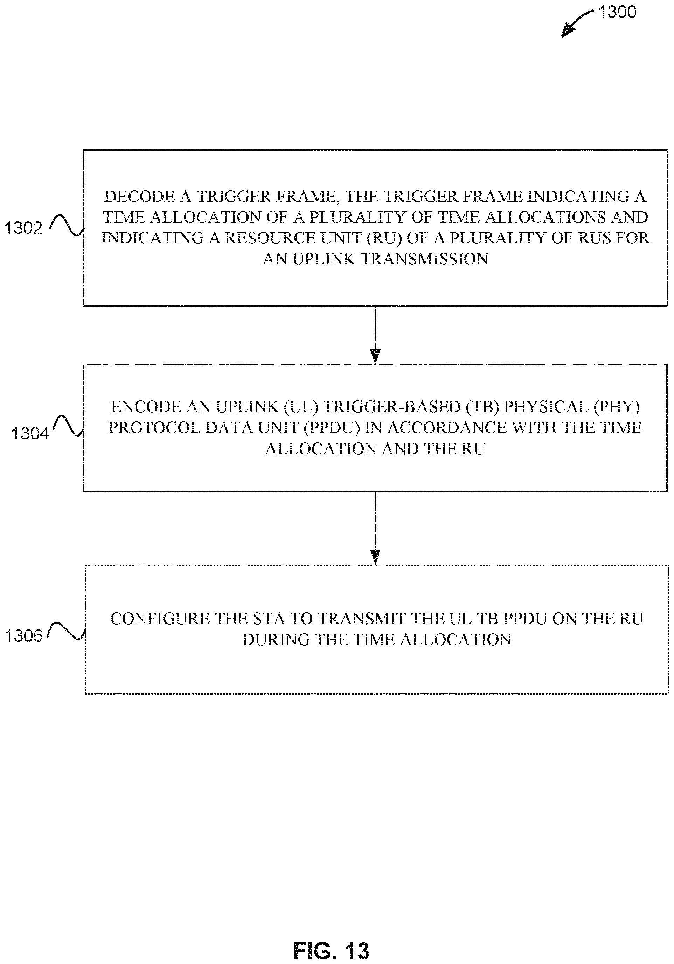

FIG. 13 illustrates a method 1300 for a trigger frame with multiple start times, in accordance with some embodiments. The method 1300 begins at operation 1302 with decoding a trigger frame, the trigger frame indicating a time allocation of a plurality of time allocations and indicating a RU of a plurality of RUs for an uplink transmission. For example, trigger frame 802 or 1200 may include time allocations for RUs as disclosed herein.

The method 1300 continues at operation 1304 with encode an UL TB PPDU in accordance with the time allocation and the RU. For example, STA1 805 configures an UL TB PPDU on RU1 804 including STF, LTF, L-RL SIG, U SIG, EHT-STF, EHT-LTF, D, D, D, D, and D. The other STAs illustrated in FIGS. 8-11 similarly are encoding UL TB PPDUs.

The method 1300 continues at operation 1306 with configuring the STA to transmit the UL TB PPDU on the RU during the time allocation. For example, an apparatus of STA1 805 may configure the STA 504 to transmit the UL TB PPDU on the RU1 804. Similarly, the other STAs illustrates in FIGS. 8-11 may be configured to transmit the UL TB PPDUs in accordance with their resource allocations indicated in the trigger frame 802. The term UL TB PPDU is being used to represent the transmissions indicated in FIGS. 8-11; however, one skilled in the art would recognize that a different name may be used.

The method 1300 may be performed by an apparatus of a non-AP or STA or an apparatus of an AP. The method 1300 may be performed by an MLD. The method 1300 may include one or more additional instructions. The method 1300 may be performed in a different order. One or more of the operations of method 1300 may be optional.

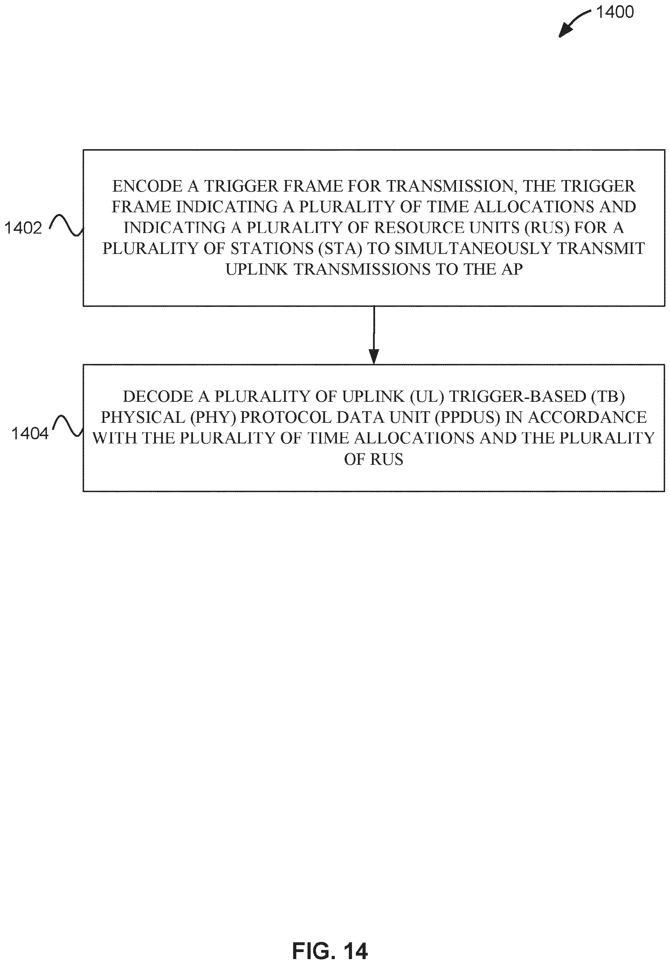

FIG. 14 illustrates a method 1400 for a trigger frame with multiple start times, in accordance with some embodiments. The method 1400 begins at operation 1402 with encode a trigger frame for transmission, the trigger frame indicating a plurality of time allocations and indicating a plurality of RUs for a plurality of STAs to simultaneously transmit uplink transmissions to the AP. For example, trigger frame 802, 1200 may include the plurality of time allocations and the plurality of RUs as disclosed herein.

The method 1400 continues at operation 1404 decoding a plurality of UL TB PPDUs in accordance with the plurality of time allocations and the plurality of RUs. For example, an AP 502 that transmitted the trigger frame 802, 1200 may decode the UL TB PPDU transmissions from the STAs of FIGS. 8-11.

The method 1400 may be performed by an apparatus of a non-AP or STA or an apparatus of an AP. The method 1400 may be performed by an MLD. The method 1400 may include one or more additional instructions. The method 1400 may be performed in a different order. One or more of the operations of method 1400 may be optional.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

## Claims

1. An apparatus for a station (STA), the apparatus comprising memory; and processing circuitry coupled to the memory, the processing circuitry configured to:
decode a trigger frame, the trigger frame indicating a time allocation of a plurality of time allocations and indicating a resource unit (RU) of a plurality of RUs for an uplink transmission;
encode an uplink (UL) trigger-based (TB) physical (PHY) protocol data unit (PPDU) in accordance with the time allocation and the RU; and
configure the STA to transmit the UL TB PPDU on the RU during the time allocation.

2. The apparatus of claim 1 wherein the plurality of time allocations indicate a plurality of start times within a transmission opportunity.

3. The apparatus of claim 1 wherein the trigger frame further indicates that a delayed transmission is permitted, and wherein the configure the STA further comprises:
configure the STA to transmit the UL TB PPDU on the RU during the time allocation, wherein a data portion of the UL TB PPDU is delayed by at least one symbol after the start of the time allocation.

4. The apparatus of claim 3 wherein the UL TB PPDU comprises: a preamble transmitted on the RU at a time boundary of the time allocation and data to be transmitted on a symbol boundary one or more symbols after the preamble is transmitted.

5. The apparatus of claim 4 wherein the preamble is transmitted a short interframe space (SIFS) after receiving the trigger frame.

6. The apparatus of claim 1 wherein the RU is a first RU, the time allocation is a first time allocation, the UL TB PPDU is a first UL TB PPUD, and the trigger frame comprises a second RU, and wherein the processing circuitry is further configured to:
encode a second UL TB PPDU in accordance with the second time allocation and the second RU; and
configure the STA to transmit the UL TB PPDU on the second RU during the second time allocation.

7. The apparatus of claim 6 wherein the preamble of the first UL TB PPDU is different than the preamble of the second UL TB PPDU.

8. The apparatus of claim 1 wherein the time allocation comprises a plurality of sub-time allocations and wherein the processing circuitry is further configured to:
encode the UL TB PPDU to further comprise a mid-amble at a start of every sub-time allocation of the plurality of sub-time allocations in accordance with the RU.

9. The apparatus of claim 1 wherein the trigger frame comprises indications of RUs and time allocations for a plurality of stations.

10. The apparatus of claim 1 wherein the trigger frame further comprises an association identifier (AID) indicating the RU and the time allocation are for random access and wherein the processing circuitry is further configured to:
perform a clear channel assessment (CCA) of the RU to gain access to the RU, and wherein the configure the STA to transmit further comprises: transmit the UL TB PPDU after gaining access to the RU.

11. The apparatus of claim 1 wherein the RU is indicated by a common portion of the trigger frame and a per user portion of the trigger frame, wherein the per user portion of the trigger frame comprises an association identification identifying the STA.

12. A method performed by an apparatus for a station (STA), the method comprising:
decoding a trigger frame, the trigger frame indicating a time allocation of a plurality of time allocations and indicating a resource unit (RU) for an uplink transmission for the STA;
encoding an uplink (UL) trigger-based (TB) physical (PHY) protocol data unit (PPDU) in accordance with the time allocation and the RU; and
configuring the STA to transmit the UL TB PPDU on the RU during the time allocation.

13. The method of claim 12 wherein the trigger frame further indicates that a delayed transmission is permitted, and wherein the configuring the STA further comprises:
configuring the STA to transmit the UL TB PPDU on the RU during the time allocation, wherein a data portion of the UL TB PPDU is delayed by at least one symbol after the start of the time allocation.

14. A non-transitory computer-readable storage medium that stores instructions for execution by one or more processors of an apparatus for an apparatus for a station (STA), the instructions to configure the one or more processors to:
decode a trigger frame, the trigger frame indicating a time allocation of a plurality of time allocations and indicating a resource unit (RU) for an uplink transmission for the STA;
encode an uplink (UL) trigger-based (TB) physical (PHY) protocol data unit (PPDU) in accordance with the time allocation and the RU; and
configure the STA to transmit the UL TB PPDU on the RU during the time allocation.

15. The non-transitory computer-readable storage medium of claim 14 wherein the trigger frame further indicates that a delayed transmission is permitted, and wherein the configure the STA further comprises:
configure the STA to transmit the UL TB PPDU on the RU during the time allocation, wherein a data portion of the UL TB PPDU is delayed by at least one symbol after the start of the time allocation.
